(19)

**Europäisches Patentamt**
**European Patent Office**
**Office européen des brevets**

(11)  **EP 4 437 251 B1**

(12)  **EUROPÄISCHE PATENTSCHRIFT**

(45) Veröffentlichungstag und Bekanntmachung des Hinweises auf die Patenterteilung:
**03.09.2025  Patentblatt 2025/36**

(21) Anmeldenummer: **22813270.0**

(22) Anmeldetag: **07.11.2022**

(51) Internationale Patentklassifikation (IPC):
*F16H 57/00* (2012.01)    *B60K 1/00* (2006.01)

(52) Gemeinsame Patentklassifikation (CPC):
**F16H 57/0006;** B60K 2001/001; B60Y 2200/91

(86) Internationale Anmeldenummer:
**PCT/EP2022/080928**

(87) Internationale Veröffentlichungsnummer:
**WO 2023/094136 (01.06.2023 Gazette 2023/22)**

(54) **VERFAHREN ZUM BETRIEB EINES ANTRIEBSSTRANGS MIT EINEM ELEKTROMOTORISCHEN ANTRIEB**

METHOD FOR OPERATING A DRIVE TRAIN HAVING AN ELECTROMOTIVE DRIVE

PROCÉDÉ POUR FAIRE FONCTIONNER UNE CHAÎNE CINÉMATIQUE DOTÉE D'UN ENTRAÎNEMENT À MOTEUR ÉLECTRIQUE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **25.11.2021  DE 102021213252**

(43) Veröffentlichungstag der Anmeldung:
**02.10.2024  Patentblatt 2024/40**

(73) Patentinhaber: **Robert Bosch GmbH**
**70442 Stuttgart (DE)**

(72) Erfinder:
• ROPERTZ, Peter
  71739 Oberriexingen (DE)
• VOGT, Andreas
  71272 Renningen (DE)

(56) Entgegenhaltungen:
DE-A1- 102015 201 313     DE-A1- 102015 207 632
DE-A1- 102017 218 636

**Beschreibung**

Stand der Technik

Elektrisch betriebene Fahrzeugantriebsstränge weisen gegenüber Fahrzeugen mit Verbrennungsmotor einen deutlich leiseren elektromotorischen Antrieb, beziehungsweise Elektromotor auf. Dadurch fallen Geräusche auf, die beim verbrennungsmotorischen Antriebsstrang nicht wahrgenommen wurden. Dies gilt insbesondere bei geringen Fahrgeschwindigkeiten des Fahrzeugs, da bei hohen Geschwindigkeiten die Reifenabrollgeräusche und Windgeräusche dominieren und eventuelle Zusatzgeräusche überdecken.

DE 10 2015 207 632 A1 betrifft eine Vorrichtung zur Verringerung von Zahnradgeräuschen eines mit einem Abtriebszahnrad in Zahneingriff stehenden Antriebszahnrades, wobei Kräfte von den Zahnrädern über ein Auflager in ein Gehäuse einleitbar sind, wobei die Vorrichtung eine Sensoreinrichtung, eine Regeleinrichtung und einen Aktuator aufweist und wobei mittels der Sensoreinrichtung ein dynamisches Schwingungssignal erfassbar ist und das Schwingungssignal der Regeleinrichtung zuführbar ist, wobei mittels der Regeleinrichtung ein Schwingungsverringerungssignal erzeugbar ist, das dem Aktuator zuführbar ist, wobei der Aktuator derart an oder in dem Auflager angeordnet ist, dass Kräfte von den Zahnrädern über den Aktuator in das Gehäuse übertragbar sind, wobei mittels des Aktuators aktiv eine relative Verschiebung und/oder eine Kraftbeaufschlagung einer von dem Auflager getragenen Komponente bewirkbar ist. Die Vorrichtung ist zur Verwendung des Aktuators auch als Sensoreinrichtung eingerichtet.

Weiterhin ist in der deutschen Patentanmeldung DE 10 2020 206 669.8 ein Verfahren zum Betrieb eines Antriebsstrangs mit elektromotorischem Antrieb zum Patent angemeldet worden, wobei eine Drehzahl und ein Antriebsmoment des Antriebs über eine verzahnte Getriebestufe für einen Abtrieb wandelbar sind, und der Antrieb mit einem Ansteuerungssignal angesteuert wird.

In der DE 10 2020 206 669.8 wird empfohlen, dem Ansteuerungssignal ein periodisches Drehmomentänderungssignal zu überlagern, welches das Antriebsmoment wechselweise verringert und verstärkt und dabei in Phase mit einer Zahnsteifigkeitsänderung der verzahnten Getriebestufe ist, wobei eine Signalstärke des Drehmomentänderungssignal bei sich verringernder Zahnsteifigkeit geringer ist als bei sich erhöhender Zahnsteifigkeit.

Bei dem in der DE 10 2020 206 669.8 beschriebenen Verfahren werden die Schwingungen der Getriebestufe mit den Zahneingriffsfrequenzen aktiv bedämpft. Die Amplitude des zusätzlich aufgebrachten, periodischen Drehmomentes hängt dabei zwingend von den absoluten Werten der Steifigkeiten der beteiligten Zähne der verzahnten Getriebestufe ab. Der zur erfolgreichen Geräuschdämpfung erforderliche, zusätzlich aufgeprägte Drehmomentverlauf kann beispielsweise in der Entwicklungsphase bestimmt werden und in der Ansteuerung des elektromotorischen Antriebs hinterlegt werden. Ein Vorteil dieses Verfahrens ist, dass sich kein oder kaum ein störendes Geräusch aufgrund der variablen Zahnsteifigkeit beim Abrollen von zwei Getriebezahnrädern ergibt. Ein solches Geräusch wäre tonal und nähme mit steigendem über die Getriebestufe übertragenem Drehmoment zu, da sich nämlich die Zahnsteifigkeit periodisch über jedes einzelne gerade in Eingriff stehende Zahnpaar ändert. Die Frequenz dieser Änderung ist somit bei einfachen Stirnradstufen die Drehzahl des Zahnrades multipliziert mit seiner Zähnezahl. Das beschrieben Verfahren kann als Softwarelösung umgesetzt werden, wobei die Software auch noch sehr spät im Entwicklungsprozess oder sogar nachträglich, z.B. als Softwareupdate für im Feld befindliche Fahrzeuge, implementiert werden kann. Als Signale können die Rotorlage und die Lage der Zahnräder und ein Schätzwert des Drehmoments verwandt werden. Das Drehmoment der elektrischen Maschine kann von der feldorientierten Regelung geschätzt werden und die Rotorlage wird für diese ebenfalls gemessen oder geschätzt. Es sind also prinzipiell keine zusätzlichen Sensoren nötig. Tribologisch beanspruchte Maschinenelemente, wie in Eingriff stehende Zahnräder mit ihren Zähnen, verändern sich jedoch über die Gebrauchsdauer aufgrund von Verschleiß und Alterung, beziehungsweise Ermüdung. Durch den Materialabtrag an den Flanken der Zahnräder verändert sich die Zahnbreite über die Lebensdauer und somit auch die Steifigkeit der Zähne. Diese über einen langen Zeitraum stattfindende zeitliche Steifigkeitsänderung ist fortschreitend und kann, abhängig von den Beanspruchungsgrößen, linear, progressiv oder degressiv sein. Die durch Verschleiß und Alterung bedingte zeitliche Änderung der Zahnsteifigkeit einer Getriebestufe ist zum Zeitpunkt der Auslegung des Getriebes nicht bekannt und kann daher nicht entsprechend initial in der Drehmomentregelung abgebildet werden.

Aus der DE 10 2017 218 636 A1 ist ein Verfahren zum Betrieb eines Antriebsstrangs mit einem elektromotorischen Antrieb mit den im Oberbegriff des Anspruchs 1 enthaltenen Merkmalen bekannt.

Offenbarung der Erfindung

Die vorliegende Erfindung verfolgt das Ziel, eine Zustandsänderung des Antriebsstranges, die auf eine zeitlich ausgedehnte Änderung der Zahnsteifigkeiten der Getriebestufe zurückzuführen ist, über die Gebrauchsdauer zu erkennen und basierend auf diesen Änderungen eine Drehmomentregelung anzupassen, so dass alterungs- oder verschleißbedingte Geräuschentwicklungen besser gedämpft werden können.

Hierzu wird ein Verfahren zum Betrieb eines Antriebsstrangs mit einem elektromotorischen Antrieb vorgeschlagen, bei dem eine Drehzahl und ein Antriebsmoment des elektromotorischen Antriebs über eine verzahnte Getriebestufe für einen Abtrieb gewandelt werden. Der elektromotorische Antrieb wird mit einem Ansteuerungssignal angesteuert, wobei dem Ansteuersignal zur Dämpfung von Getriebegeräuschen ein periodisches

Drehmomentänderungssignal überlagert wird, welches das Antriebsmoment wechselweise verringert und verstärkt, wobei das periodische Drehmomentänderungssignal in Phase mit einer periodischen Zahnsteifigkeitsänderung der verzahnten Getriebestufe ist. Das erfindungsgemäße Verfahren umfasst die folgenden Schritte:

a) Ermitteln einer von der Zahnsteifigkeit der verzahnten Getriebestufe abhängigen aktuellen Zustandsgröße des Antriebsstranges aus wenigstens einem Betriebszustandssignal des Antriebsstranges, wobei die im Schritt a) des Ermittelns ermittelte aktuelle Zustandsgröße abhängig ist von einer verschleiß- und/oder alterungsbedingten Änderung der Zahnsteifigkeit der verzahnten Getriebestufe,
b) Zuordnen der aktuellen Zustandsgröße zu einem Klassifikationsraum von Zustandsgrößen, wobei allen Zustandsgrößen des Klassifikationsraums Zustandsklassen zugeordnet sind,
c) Ermittlung einer der aktuellen Zustandsgröße in dem Klassifikationsraum zugeordneten aktuellen Zustandsklasse,
d) Prüfen ob die im Schritt c) der Ermittlung ermittelte aktuelle Zustandsklasse eine vorgegebene Zielzustandsklasse ist,

wobei das Verfahren, wenn die aktuelle Zustandsklasse nicht die Zielzustandsklasse ist, weiterhin die folgenden Schritte ausführt:

e) Erzeugen des periodischen Drehmomentänderungssignals in Abhängigkeit von einem Unterschied zwischen der in Schritt a) des Ermittelns ermittelten aktuellen Zustandsgröße (Z') und der vorgegebenen Zielzustandsklasse,
f) Überlagern des Ansteuersignals mit einem in Abhängigkeit von dem Unterschied erzeugten periodischen Drehmomentänderungssignal und
g) Wiederholen der Schritte a) bis f) zumindest bis im Schritt d) des Prüfens festgestellt wird, dass im vorausgegangenen Schritt a) des Ermittelns eine der Zielzustandsklasse zugeordnete aktuelle Zustandsgröße ermittelt wurde.

Das erfindungsgemäße Verfahren kann in rein elektrisch betriebenen Antriebssträngen von Fahrzeugen eingesetzt werden, aber auch bei anderen Antriebssträngen mit elektrischen Maschinen, die ein Getriebe aufweisen, jedoch keinen Verbrennungsmotor. Ein solcher Antriebsstrang kann beispielsweise ein Antriebsstrang aus der Industrietechnik oder auch der weißen Ware sein. Bei der weißen Ware handelt es sich u.a. um Kühlschränke, Gefrierschränke etc., deren Kältemittelkompressor elektromotorisch angetrieben wird. Bei der weißen Ware handelt es sich aber auch um Waschmaschinen und Geschirrspülmaschinen, deren Pumpe bzw. Trommel elektromotorisch angetrieben wird. Außerdem kann der erfindungsgemäße Antriebsstrang auch bei Elektrowerkzeugen mit Getriebe Anwendung finden. Zu solchen Elektrowerkzeugen mit Getriebe gehören insbesondere Bohrmaschinen. Jedoch können beispielsweise auch Elektrosägen und Schleifmaschinen solche Antriebsstränge jeweils mit Getriebe aufweisen.

Vorteile der Erfindung

Mittels der vorliegenden Erfindung kann anhand von Betriebszustandssignalen des Antriebsstranges, wie beispielsweise einem Rotorlage-Signal des elektromotorischen Antriebs, einem Drehmoment- oder Motorstromsignal des elektromotorischen Antriebs und/oder einem Körperschallsensorsignal, welches den Körperschall wenigstens einer Komponente des Antriebsstrangs erfasst, ein aus einer Alterung oder einem Verschleiß resultierende zeitliche Änderung der Zahnsteifigkeit einer Getriebestufe erkannt werden und Maßnahmen eingeleitet werden, welche einer dadurch bedingten Geräuschentwicklung entgegenwirken. Da in dem Verfahren eine Überlagerung des Ansteuersignals mit einem periodischen Drehmomentänderungssignal erfolgt, das in Abhängigkeit von einem Unterschied zwischen einer aus wenigstens einem Betriebszustandssignal abgeleiteten Zustandsgröße und einer Zielzustandsklasse erzeugt wird, verändert sich dadurch die von dem Betriebszustandssignal abhängige Zustandsgröße. Dadurch ist vorteilhaft ein Regelverfahren möglich.

Vorteilhafte Ausführungsformen und Weiterbildungen der Erfindung werden durch die in den abhängigen Ansprüchen angegebenen Merkmale ermöglicht.

Besonders vorteilhaft ist es, dass das Verfahren, falls im Schritt d) des Prüfens festgestellt wird, dass im vorausgegangenen Schritt a) des Ermittelns eine der Zielzustandsklasse zugeordnete aktuelle Zustandsgröße ermittelt wurde, die Schritte e) des Erzeugens und f) des Überlagerns nicht durchführt und stattdessen in einem Schritt das periodische Drehmomentänderungssignal unabhängig von der aktuellen Zustandsgröße bildet und der Ansteuergröße überlagert, und Wiederholen der Schritte a) bis d) bis im Schritt d) des Prüfens festgestellt wird, dass die ermittelte aktuelle Zustandsklasse nicht die vorgegebene Zielzustandsklasse ist. Bei Erreichen der Zielzustandsklasse befindet sich die Drehmomentregelung im angestrebten Zielzustand, eine weitere Änderung der Zustandsgröße könnte daher im ungünstigen Fall ein nachteiliges Herauslaufen des Regelalgorithmus aus dem Zielkorridor bewirken. Daher ist es vorteilhaft bei Erreichen der Zielzustandsklasse, den Schritt des Erzeugens des periodischen Drehmomentänderungssignals in Abhängigkeit von einem Unterschied zwischen der in Schritt a) ermittelten aktuellen Zustandsgröße und der vorgegebenen Zielzustandsklasse und das nachfolgende Überlagern des Ansteuersignals mit einem in Abhängigkeit von dem Unterschied erzeugten periodischen Drehmomentänderungssignal auszusetzen. Stattdessen wird das periodische Drehmomentänderungssignal, welches analog zur Darstellung in der DE 10 2020 206 669.8 erzeugt werden kann, unverändert dem Ansteuersignal überlagert. Sobald das Verfahren bei nachfolgenden Durchläufen erkennt, dass die aktuell ermittelte Zustandsgröße die Zielzustandsklasse verlassen hat, wird dies im Schritt d) des Prüfens erkannt, und die Schritte e) und f) werden erneut solange durchgeführt, bis die Zustandsgröße wieder der Zielzustandsklasse entspricht.

Die Zielzustandsklasse in dem Klassifikationsraum können vorteilhaft auf der Grundlage von Referenz-Zustandsgrößen vorgegeben werden. Die Referenz-Zustandsgrößen können auf der Grundlage maschinenlernender Systeme in einer zu Schritt a) analogen Weise aus den gleichen Betriebszustandssignalen von Referenz-Antriebssträngen ermittelt werden, wobei die Referenz-Antriebsstränge unterschiedlichen Schadensklassen zugeordnet sind und jeder Referenz-Antriebsstrang jeder Schadensklasse bis auf einen individuell vorgegeben Schaden oder Verschleißzustand einen weitgehend gleichartigen Aufbau aufweist.

Der Klassifikationsraum mit den Zustandsklassen als Grundlage der Evaluierung des Systemzustandes kann beispielsweise durch einen Klassifikationsalgorithmus auf Basis von Referenz-Antriebssträngen trainiert werden, wobei jedem individuelle Referenz-Antriebsstrang eine bekannte Zustandsklasse zugeordnet wird. Ein Ensemble von Antriebssträngen kann beispielsweise mindestens zehn oder hundert individuelle Referenz-Antriebsstränge umfassen. Die Referenz-Antriebsstränge unterscheiden sich durch einen bekannten Zustand der verschleiß- oder alterungsbedingten Veränderung wenigstens einer Getriebestufe, im Übrigen sind sie baugleich. Das Training des Klassifikationsalgorithmus kann erfolgen, indem die Referenz-Maschinen betrieben werden und dabei für jeden Referenz-Antriebsstrang das gleiche Betriebszustandssignal oder die gleiche Gruppe von Betriebszustandssignalen empfangen wird, beispielsweise ein zu einer Statorspule des elektromotorischen Antriebes des Antriebsstranges zugehörige Referenz-Wechselstromsignal. Die dadurch evaluierten Zustandsgrößen können zu Zustandsklassen zusammengefasst werden. Die Zustandsklassen können Schadensklassen repräsentieren. Die so gewonnenen Daten des Klassifikationsraumes können beispielsweise in einem Speicher in einem Steuergerät eines Antriebstranges hinterlegt werden.

Besonders vorteilhaft ist es wenn das Verfahren mit einem Klassifikationsalgorithmus durchgeführt wird, wobei im Schritt a) des Ermittelns aus dem wenigstens einem Betriebszustandssignal des Antriebsstranges Werte mehrerer Merkmale abgeleitet werden, und aus den Werten der mehreren Merkmale durch Koordinatentransformation sogenannte Principal-Component-Größen gebildet werden, wobei die Anzahl der Merkmale die Dimensionen eines Principal-Component-Raumes bilden, wobei der Principal-Component-Raum den Klassifikationsraum bildet und wobei jede Position in dem Principal-Component-Raum eine Zustandsgröße darstellt, die den Werten der mehreren Merkmale oder der daraus abgeleiteten Merkmale zugeordnet ist. Der Verlauf der verschleiß- oder alterungsbedingten Änderung der aktuellen Zustandsgröße beschreibt eine Raumkurve im Principal-Component-Raum. Dadurch ist vorteilhaft eine Regelung des periodischen Drehmomentänderungssignals möglich, welche die aktuell ermittelte Zustandsgröße in den Raumbereich einer Zielzustandsklasse zurückführt.

In einfacher Weise können benachbarte Positionen in einem begrenzten Raumbereich des Principal-Component-Raums als eine einzige Zielzustandsklasse vorgegeben werden. Positionen außerhalb dieses Raumbereichs werden dann als Anomalie erkannt, welche eine Rückführung der Zustandsgröße in die Zielzustandsklasse veranlassen. Positionen außerhalb des Raumbereichs der Zielzustandsklasse können beispielsweise als eine zweite Zustandsklasse "Anormal" definiert sein.

Es ist jedoch nicht zwingend notwendig, eine Principal-Component-Analyse durchzuführen, und die Zustände in einem Principal-Component-Raum zu klassifizieren. Grundsätzlich ist es auch möglich den Klassifikationsraum direkt mit den bestimmten Zuständen zu beschreiben. Die Principal-Component-Analyse verbessert jedoch die Leistungsfähigkeit der Klassifikationsalgorithmen, und ist daher besonders vorteilhaft.

Die Positionen außerhalb des der Zielzustandsklasse zugeordneten Raumbereichs können aber auch in wenigstens zwei weitere Zustandsklassen, insbesondere Schadensklassen definierende Zustandsklassen unterteilt sein.

Das wenigstens eine Betriebszustandssignal oder mehrere Betriebszustandssignale können vorteilhaft ausgewählt sein aus der folgenden Gruppe von Betriebszustandssignalen:

- ein Rotorlage-Signal des elektromotorischen Antriebs,
- ein Motorstromsignal des elektromotorischen Antriebs,
- ein Körperschallsensorsignal, welches den Körperschall wenigstens einer Komponente des Antriebsstrangs erfasst
- ein durch eine Schwingungsanregung des elektromotorischen Antriebs hervorgerufenes Luftschallsignal,
- ein hydraulischer Druck einer hydraulischen Komponente des elektromotorischen Antriebs.

Das wenigstens eine Betriebszustandssignale kann insbesondere mit einem entsprechenden Sensorelement erfasst werden. So kann beispielsweise ein in dem elektromotorischen Antrieb durch Momentschwankungen der Abtriebsseite in den Motorstrom rückgekoppelte Motorstromsignal als Betriebszustandssignal mit einem Motorstromsensor erfasst werden.

Vorteilhaft kann im Schritt des Erzeugens in Abhängigkeit von einem Unterschied zwischen der in Schritt c) ermittelten Zustandsklasse und einer vorgegebenen Zielzustandsklasse die Größe eines Applikationsparameters gebildet werden. Dieser Applikationsparameter wird zur Änderung des periodischen Drehmomentänderungssignals herangezogen.

Das erfindungsgemäße Verfahren kann auf einem Computer implementiert sein, wobei ein Computer im weitesten Sinne auch eine Datenverarbeitungsanlage oder ein Mikroprozessor sein kann. Demgemäß umfasst die Erfindung auch ein Computerprogramm, das Befehle umfasst, die bei seiner Ausführung durch einen Computer diesen veranlassen, das erfindungsgemäße Verfahren auszuführen, und einen computerlesbaren Datenträger, auf dem dieses Computerprogramm gespeichert ist.

Die Erfindung umfasst schließlich auch einen Computer, der solch einen computerlesbaren Datenträger umfasst sowie eine Auswerte- und Steuereinheit, die solch einen computerlesbaren Datenträger umfasst und ferner Mittel zur Durchführung der erfindungsgemäßen Verfahrensschritte umfasst.

Kurze Beschreibung der Zeichnungen

Nachfolgend werden mögliche Ausführungsformen der Erfindung unter Bezugnahme auf die beiliegende Zeichnung erläutert. In der Zeichnung zeigen:

Fig. 1     einen in einem Fahrzeug eingesetzten Antriebsstrang, der ein Antrieb und ein zugehöriges Steuergerät mit einer Geräuschdämpfung aufweist,

Fig. 2     einen permanenterregten Synchronmotor als Beispiel eines in dem Antriebsstrang eingesetzten elektromotorischen Antriebs,

Fig. 3     einen Klassifikationsraum am Beispiel einer Principal-Component Analyse,

Fig. 4     ein Beispiel für einen alterungs- und/oder verschleißbedingten Verlauf einer Änderung der aktuellen Zustandsgröße in einem zweidimensionalen Principal-Component-Raum,

Fig. 5     Verfahrensschritte des erfindungsgemäßen Verfahrens.

Ausführungsformen der Erfindung

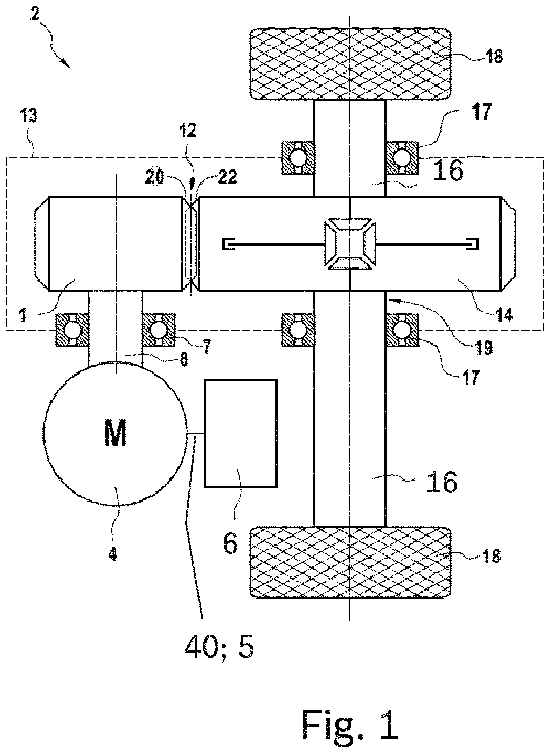

Fig. 1 zeigt schematisch einen Antriebsstrang 2 eines Elektrokraftfahrzeugs. Das Elektrokraftfahrzeug weist vorzugsweise keinen verbrennungsmotorischen Antrieb auf und kann insoweit ausschließlich einen elektromotorischen Antrieb 4 aufweisen. Der elektromotorische Antrieb 4 ist beispielsweise als Synchronmotor, insbesondere als permanenterregter Synchronmotor, als umrichtergeführter Asynchronmotor, Gleichstrommotor, Reluktanzmaschine oder Transversalflussmotor oder anderer Elektromotor ausgeführt. Das Antriebsmoment und die Drehzahl des Antriebs 4 sind mittels eines Steuergeräts 6 veränderlich, das insoweit zur Ansteuerung des Antriebs 4 vorgesehen ist.

Eine mittels eines Wälzlagers 7 drehbar gelagerte Ausgangswelle 8 des elektromotorischen Antriebs 4 ist mit einem ersten Zahnrad 1 einer verzahnten Getriebestufe 12 drehfest verbunden, die innerhalb eines Getriebegehäuses 13 angeordnet ist. Das erste Zahnrad 1 kämmt mit einem zweiten Zahnrad 14 der Getriebestufe 12. Das zweite Zahnrad 14 kann über ein Differentialgetriebe mit zwei Antriebswellen 16 gekoppelt sein, die in Wälzlagern 17 gelagert und drehfest mit Fahrzeugrädern 18 verbunden sind.

Das erste Zahnrad 1 ist im Durchmesser kleiner als das zweite Zahnrad 14 und bildet insoweit ein Zahnritzel. Eine Drehzahl und ein Antriebsmoment des Antriebs 4 werden über die verzahnte Getriebestufe 12 für einen Abtrieb 19 gewandelt, der die Antriebswellen 16 aufweist. Mittels der Getriebestufe 12 wird die Drehzahl des Antriebs 4 in eine geringere Getriebe-Ausgangsdrehzahl übersetzt und das Antriebsmoment wird in ein höheres Getriebe-Ausgangsmoment übersetzt. Das zweite Zahnrad 14 kann ein Differentialgetriebe beinhalten, welche das Getriebe-Ausgangsmoment gleichmäßig auf die beiden Fahrzeugräder 18 verteilt. Alternativ kann die Getriebestufe 12 aber auch als Planetengetriebe und/oder als schaltbares Getriebe mit mehreren Stufen, insbesondere zwei Stufen, ausgeführt sein, die voneinander unterschiedliche Übersetzungen aufweisen.

Die Zahnräder 1, 14 können geradeverzahnt oder schrägverzahnt sein. Die Zähne 20, 22 der Zahnräder 1, 14 kämmen miteinander. Das System aus den beiden ineinander eingreifenden Zahnrädern 1, 14 mit einer variablen Zahnsteifigkeit stellt einen Zweimassenschwinger mit variabler Federkonstante dar. Dabei weist das erste Zahnrad 1 eine erste Massenträgheit auf und das zweite Zahnrad 14 weist eine zweite Massenträgheit auf. Mithin bilden die beiden Zahnräder 1, 14 den Zweimassenschwinger, der mit einer variablen drehwegabhängiger Frequenz, einer sogenannten Zahneingriffsfrequenz, schwingt. Durch die variable Zahnsteifigkeit der Zähne werden an den sich kämmenden Zahnrädern 1, 14 Schwingungen beim Rotieren angeregt, welche über die Zahnräder 1, 14 die Wellen 8, 16 und die Wälzlager 7, 17 auf das Getriebegehäuse 13 übertragen und dort von einer vibrierenden Oberfläche als Geräusch abgestrahlt werden. Neben den rotativen Schwingungen schwingen die Zahnräder 1, 14 auch translatorisch mit den Lagern 7, 17 gegen das Getriebegehäuse 13, wodurch die Geräusche verursacht werden. Hierdurch wird das Getriebegehäuse 13 zu Schwingungen angeregt, sodass sich in der Luft Schallwellen in Form von Druck- und Dichteschwankungen fortpflanzen.

Das Steuergerät 6 kann eine Regelung aufweisen, welche auf der Einprägung, d.h. Überlagerung einer periodischen additiven Drehmomentschwingung über den elektrischen Antrieb 4 zur Dämpfung unerwünschter Geräusche mit der Zahneingriffsfrequenz beim Betrieb des Elektrokraftfahrzeugs beruht. Hierzu wird ein periodisches Drehmomentänderungssignal 5 einem Ansteuerungssignal 40 des Antriebs 4 überlagert. Das periodische Drehmomentänderungssignal 5 verringert und verstärkt wechselweise das Antriebsmoment. Dabei ist das periodische Drehmomentänderungssignal 5 in Phase mit der Zahnsteifigkeit der in den Kraftfluss geschalteten Getriebestufe 12. Das Ansteuerungssignal 40 kann insbesondere ein Drehmomentregelsignal oder auch ein Ausgangsspannungssignal einer Drehmomentregelung sein. Diese Drehmomentregelung kann insbesondere feldorientiert, d.h. eine Vektorregelung sein. Durch eine feldorientierte Regelung wird erreicht, dass mit einem im Steuergerät 6 vorgesehenen Frequenzumrichter die Drehzahl- und Positioniergenauigkeit verbessert wird.

Dieses periodische Drehmomentänderungssignal 5 hat idealerweise keinen Gleichanteil oder einen Gleichanteil von null. Das Drehmomentänderungssignal 5 erhöht oder reduziert ein übertragenes Gesamtmoment, das sich aufgrund des Drehmomentregelsignals und des Antriebssteuerungssignals am Antrieb 4 einstellt. Dabei bestimmt die Zahnsteifigkeit der augenblicklich im Zahneingriff befindlichen Zähne 20, 22, ob das Gesamtmoment erhöht oder reduziert wird. Im Mittel wird daher das vom Fahrer angeforderte Ausgangsdrehmoment, welches von der parallel arbeitenden Drehmomentregelung eingestellt wird, nicht geändert. Das periodische Drehmomentänderungssignal 5 kann den exakten Verlauf der Drehmomentschwankung nachbilden oder beispielsweise durch ein Sinussignal gleicher Phase und Frequenz angenähert werden.

Da sich der Einfluss der Zahnsteifigkeitsänderung mit einem vom Fahrer angeforderten Getriebe-Ausgangsmoment ändert, muss die Amplitude, d.h. eine Signalstärke, des Drehmomentregelsignals entsprechend mit dem angeforderten Getriebe-Ausgangsmoment angepasst werden.

Durch die Addition eines periodischen stationären Drehmomentsollwert- oder Spannungssollwertsignals auf ein Ausgangssignal des beispielsweise feldorientierten Drehmoment- oder Stromreglers kann ein Getriebegeräusch mit der Zahneingriffsfrequenz gedämpft werden.

Ein derartiges Verfahren ist in der am 28.05.2020 angemeldeten deutschen Patentanmeldung DE 10 2020 206 669.8 ausführlich dargestellt und beschrieben worden. Insoweit wird an dieser Stelle ausdrücklich auf den Offenbarungsgehalt der DE 10 2020 206 669.8 verwiesen.

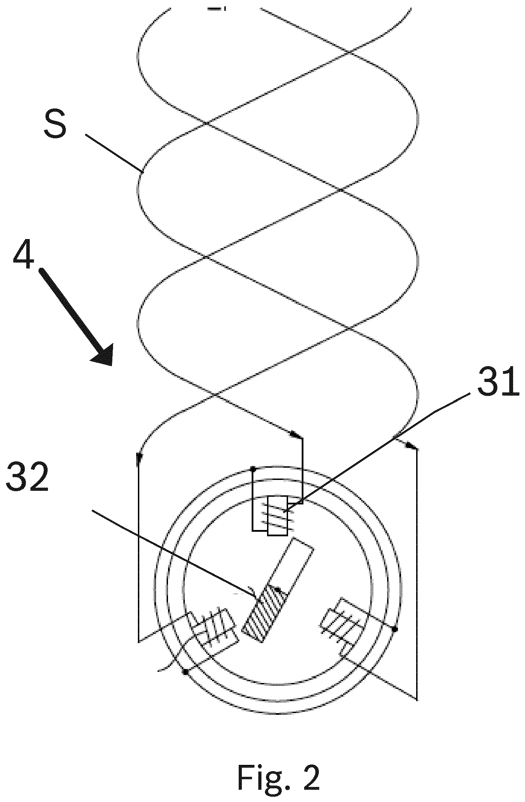

Fig. 2 zeigt einen permanenterregten Synchronmotor als Ausführungsbeispiel des elektromotorischen Antriebs 4. Drei Statorspulen 31 werden mit jeweils um 120° phasenverschobenen sinusförmigen Spannungen bzw. Strömen I versorgt. Drehmomentschwankungen an dem mit der Ausgangswelle 8 gekoppelten Rotor 32 durch Momentänderungen an der Getriebestufe 12 führen durch die induktive Rückkopplung auf die Statorspulen 31 zu Veränderungen der Motorströme. Diese Veränderungen können durch geeignete Signalmerkmale beschrieben werden und können als Grundlage dafür dienen, verschleißbedingte Änderungen der Zahnsteifigkeit der Getriebestufe 12 zu erfassen. Die induktive Rückkopplung von Momentschwankungen der Abtriebsseite des elektromotorischen Antriebs 4 auf den Motorstrom bewirken also, dass der Motorstrom Informationen über die Momentänderungen enthält und somit auch über Veränderungen im Getriebe. Das Motorstromsignal und/oder ein daraus abgeleitetes Signal kann mit einem Sensor oder mehreren Sensoren erfasst und also beispielsweise als das wenigstens eine Betriebszustandssignal S verwandt werden. Als Betriebszustandssignal können aber auch beispielsweise ein Rotorlagensignal des Rotors 32 oder alternativ oder zusätzlich ein mittels eines Mikrophons empfangenes Körperschallsensorsignal einer Komponente des Antriebsstrangs 2 verwandt werden.

Aus dem wenigstens einem Betriebszustandssignal S oder den mehreren Betriebszustandssignalen des Antriebsstranges können Werte mehrerer Merkmale, beispielsweise Merkmale $T_1$ - $T_{11}$; $F_1$ - $F_{13}$, insbesondere Merkmale als Grundlage einer Principal-Component-Analyse abgeleitet werden. Wird beispielsweise das Motorstromsignal als Betriebszustandssignal S verwandt, so kann dieses in Komponenten x(n); s(k) und $f_k$ zerlegt werden, wobei x(n) das zeitlich abgetastete Wechselstromsignal ist, s(k) das zugehörige diskrete Frequenzspektrum und $f_k$ die zu s(k) gehörige Frequenz darstellt.

Aus den Komponenten x(n); s(k) und $f_k$ können beispielsweise Merkmale $T_1$ bis $T_{11}$ und $F_1$ bis $F_{13}$ im Zeitbereich oder Frequenzbereich gebildet werden, wobei es sich beispielsweise um die folgenden in ("A new approach to intelligent fault diagnosis of rotating machinery", Yaguo Lei et. al., Expert Systems with Applications 35, (2008) 1593-1600) vorgeschlagenen Merkmale handeln kann:

$$T_1 = \frac{\sum_{n=1}^{N} x(n)}{N} \; ; \; T_2 = \sqrt{\frac{\sum_{n=1}^{N}(x(n)-T_1)^2}{N-1}} \; ; \qquad T_3 = \left(\frac{\sum_{n=1}^{N}\sqrt{|x(n)|}}{N}\right)^2 \; ;$$

$$T_4 = \sqrt{\frac{\sum_{n=1}^{N}(x(n))^2}{N}} \; ; \; T_5 = \max|x(n)| \; ; \qquad T_6 = \sqrt{\frac{\sum_{n=1}^{N}(x(n)-T_1)^3}{(N-1)T_2^3}}$$

$$T_7 = \sqrt{\frac{\sum_{n=1}^{N}(x(n)-T_1)^4}{(N-1)T_2^4}} \; ; \; T_8 = \frac{T_5}{T_4} \; ; \; T_9 = \frac{T_5}{T_3} \; ; \quad T_{10} = \frac{T_4}{\frac{1}{N}\sum_{n=1}^{N}|x(n)|}$$

$$T_{11} = \frac{T_5}{\frac{1}{N}\sum_{n=1}^{N}|x(n)|} \; ;$$

$$F_1 = \frac{\sum_{k=1}^{K} s(k)}{K} \; ; \qquad F_2 = \frac{\sum_{k=1}^{K}(s(k)-F_1)^2}{K-1} \; ; \qquad F_3 = \frac{\sum_{k=1}^{K}(s(k)-F_1)^3}{K(\sqrt{F_2})^3}$$

$$F_4 = \frac{\sum_{k=1}^{K}(s(k)-F_1)^4}{K F_2^2} \; ; F_5 = \frac{\sum_{k=1}^{K} f_k s(k)}{\sum_{k=1}^{K} s(k)} \; ; \qquad F_6 = \sqrt{\frac{\sum_{k=1}^{K}(f_k - F_5)^2 s(k)}{K}}$$

$$F_7 = \sqrt{\frac{\sum_{k=1}^{K} f_k^2 s(k)}{\sum_{k=1}^{K} s(k)}} \; ; F_8 = \sqrt{\frac{\sum_{k=1}^{K} f_k^4 s(k)}{\sum_{k=1}^{K} f_k^2 s(k)}} \; ; \qquad F_9 = \frac{\sum_{k=1}^{K} f_k^2 s(k)}{\sum_{k=1}^{K} s(k) \sum_{k=1}^{K} f_k^4 s(k)}$$

$$F_{10} = \frac{F_6}{F_5} \; ; \qquad F_{11} = \frac{\sum_{k=1}^{K}(f_k - F_5)^3 s(k)}{K F_6^3} \; ; \quad F_{12} = \frac{\sum_{k=1}^{K}(f_k - F_5)^4 s(k)}{K F_6^4} \; ;$$

$$F_{13} = \frac{\sum_{k=1}^{K}(f_k - F_5)^{1/2} s(k)}{K \sqrt{F_6}} \; .$$

Aus den Merkmalen $T_1$ - $T_{11}$; $F_1$ - $F_{13}$ können durch eine Koordinatentransformation, insbesondere eine Hauptachsentransformation oder eine Hauptkomponentenanlyse (Principal Component Analysis, PCA) abgeleitete Merkmale gebildet werden. Die abgeleiteten Merkmale können beispielsweise Principal-Component-Größen oder kurz "Principal Components" sein. Die Anzahl der Merkmale entspricht der Anzahl der Principal-Component-Größen. Die Anzahl der Merkmale $T_1$ - $T_{11}$; $F_1$ - $F_{13}$ bildet die Dimensionen eines Principal-Component-Raumes. Der Principal-Component-Raum kann als Klassifikationsraum 100 angesehen werden, wobei jede Position in dem Principal-Component-Raum eine Zustandsgröße Z darstellt, die den Werten der mehreren Merkmale $T_1$ - $T_{11}$; $F_1$ - $F_{13}$ oder der daraus abgeleiteten Merkmale zugeordnet ist. Die Zuordnung der Zustandsgrößen Z kann also auf Basis von abgeleiteten Merkmalen erfolgen, die aus den Merkmalen durch eine Transformation, insbesondere eine lineare Transformation, bevorzugt eine Hauptachsentransformation oder eine Hauptkomponentenanlyse hervorgehen.

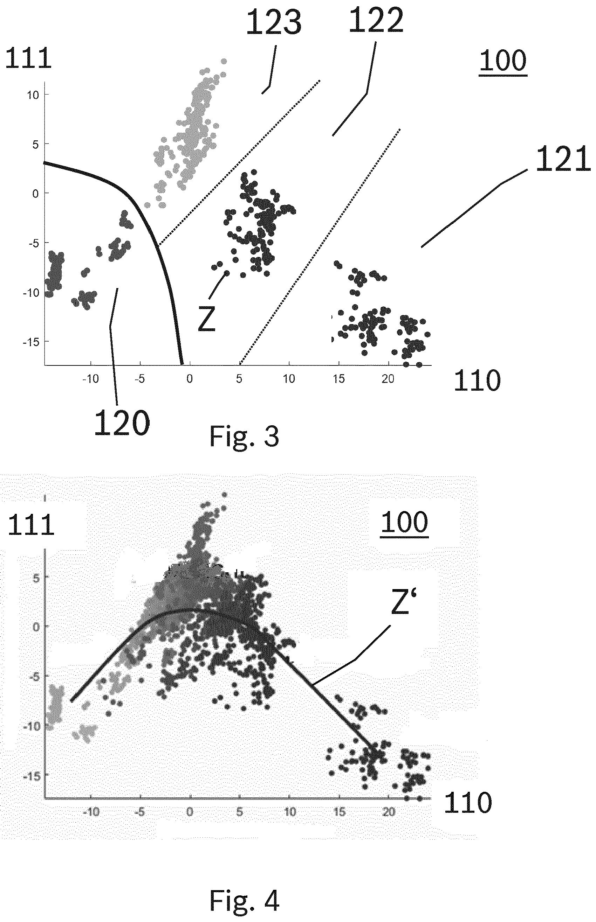

Die Zuordnung der Zustandsgröße Z sei anhand des Beispiels der Fig. 3 erläutert. Fig. 3 zeigt einen zweidimensionalen Principal-Component-Raum als Beispiel eines Klassifikationsraums 100. Im vorliegenden Beispiel werden also nur zwei Merkmale betrachtet. Aus den beiden Merkmalen werden zwei Principal-Component-Größen abgeleitet. Auf der Abszisse ist der Wert einer First Principal-Component-Größe 110 und auf der Ordinate der Wert einer Second Principal-Component-Größe 111 aufgetragen. Die First Principal Component und die Second Principal Component können beispielsweise aus zwei der Merkmale $T_1$ - $T_{11}$; $F_1$ - $F_{13}$ durch die oben beschriebene Transformation abgeleitet sein. Jede Position in dem Principal-Component-Raum stellt eine Zustandsgröße Z dar, die den Werten der

mehreren Merkmale $T_1$ - $T_{11}$; $F_1$ - $F_{13}$ beziehungsweise der daraus abgeleiteten Principal-Component-Größen zugeordnet ist.

Erkenntnisse über die Zustandsgrößen Z von Antriebssträngen lassen sich aus Auswertungen an Referenz-Antriebssträngen gewinnen. Die Referenz-Antriebsstränge können den gleichen Aufbau wie in Fig. 1 aufweisen, unterscheiden sich jedoch in Hinblick auf den Verschieß oder die Alterung einzelner Komponenten. Durch Auswertungen des jeweiligen gleichartigen Betriebszustandssignals lassen sich Zustandsgrößen Z ermitteln, wie sie in Fig. 3 in den Klassifikationsraum 100 eingetragen wurden. Da der Zustand der Referenz-Antriebsstränge bekannt ist, lassen sich daraus Zustandsklassen 120, 121, 122, 123 ableiten. So entsprechen beispielsweise die in dem Raumbereich 120 des Principal-Component-Raumes 100 nahe bei einander liegenden Positionen der Zustandsgrößen Z solchen Referenz-Antriebssträngen, die als "neu" und verschleißfrei angesehen wurden. Die jenseits des Raumbereichs 120 angesiedelten Zustandsgrößen Z wurden mit Referenz-Antriebssträngen ermittelt, welche bestimmte Alterungs- oder Verschleißmerkmale aufweisen und daher unterschiedlichen Schadensklassen zugeordnet sind. Es können mehrere einer Schadenklasse zugeordnete Referenz-Antriebstränge ausgewertet werden, um auf eine ausreichend große Anzahl an Zustandsgrößen Z zurückgreifen zu können. Auf diese Weise können in Fig. 3 weitere Zustandsklassen als Raumbereiche definiert werden, wie beispielsweise die Zustandsklasse 123 "gebraucht"; die Zustandsklasse 122 "mit starken Geräusch behaftet" oder die Zustandsklasse 121 "schadhaft, bzw. vom Ausfall bedroht".

Die derart gewonnenen Kenntnisse über die Positionen der Zustandsklassen in den Raumbereichen des Klassifikationsraumes 100 können im Steuergerät 6 eines Antriebsstranges 2 hinterlegt werden. Hinterlegt wird vorzugsweise ein Klassifikationsraum 100, in dem zumindest die Zielzustandsklasse 120 als abgegrenzter Raumbereich definiert ist.

Wenn der Antriebsstrang 2 altert, so durchläuft nun die nach gleichen Kriterien über einen längeren Zeitraum ermittelte aktuelle Zustandsgröße Z' während der Alterung einen Verlauf wie er durch die Kurve in Fig. 4 dargestellt ist. Dabei wandert die Position der aktuellen Zustandsgröße Z' in dem Klassifikationsraum 100 mit der Zeit allmählich aus der Zielzustandsklasse 120 in die Zustandsklasse 123 und von dort in die Zustandsklasse 122 bis schließlich zur Zustandsklasse 121.

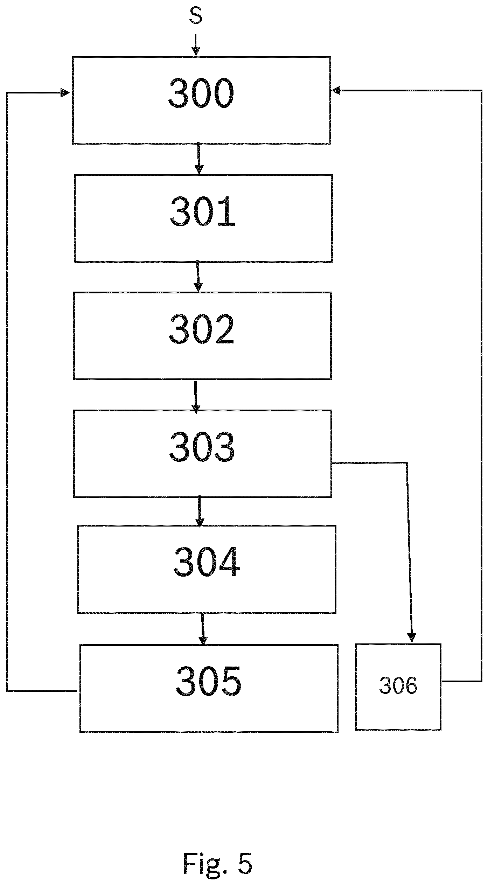

Mit dem anhand der Fig. 5 weiter unten beschriebenen Verfahren wird eine Zustandsänderung des Antriebsstranges, die auf eine zeitlich ausgedehnte Änderung der Zahnsteifigkeiten der Getriebestufe zurückzuführen ist, über die Gebrauchsdauer erkannt und basierend auf dieser Änderung die Drehmomentregelung so angepasst, dass alterungs- oder verschleißbedingte Geräuschentwicklungen besser gedämpft werden.

Dabei wird zunächst in einem Schritt 300 eine von der Zahnsteifigkeit der verzahnten Getriebestufe 12 abhängige aktuellen Zustandsgröße Z' des Antriebsstranges 4 aus dem Betriebszustandssignal S ermittelt. Sodann wird in einem nachfolgenden Schritt 301 diese aktuelle Zustandsgröße Z' dem Klassifikationsraum 100 von Zustandsgrößen zugeordnet. In einem weiteren auf den Schritt 301 folgenden Schritt 302 kann die der aktuellen Zustandsgröße Z' in dem Klassifikationsraum 100 zugeordnete aktuellen Zustandsklasse ermittelt werden. In dem dann nachfolgenden Schritt 303 wird geprüft, ob die im Schritt 302 ermittelte aktuelle Zustandsklasse die Zielzustandsklasse 120 ist. Wird festgestellt, dass die im Schritt 302 ermittelte aktuelle Zustandsklasse nicht die Zielzustandsklasse 120 ist, so wird in einem folgenden Schritt 304 das periodische Drehmomentänderungssignal 5 in Abhängigkeit von einem Unterschied zwischen der in Schritt 300 ermittelten aktuellen Zustandsklasse und der vorgegebenen Zielzustandsklasse 120 erzeugt.

Dies kann beispielsweise in einfacher Weise dadurch geschehen, dass bei einem erkannten Unterschied zwischen der in Schritt a) ermittelten aktuellen Zustandsgröße Z' und der Zielzustandsklasse ein Applikationsparameters A gebildet wird. Der Applikationsparameter A wird beispielsweise vorzugsweise abhängig von der Größe des Abstandes der aktuellen Zustandsgröße Z' von der Zielzustandsklasse 120 im Klassifikationsraum 100 gebildet. In Abhängigkeit von dem so gebildeten Applikationsparameter wird das zuvor wie oben beschrieben gebildete periodische Drehmomentänderungssignal 5 in dem Steuergerät 6 verändert, wobei der Applikationsparameter beispielweise die Amplitude des Drehmomentänderungssignals 5 modifiziert. Das veränderte periodische Drehmomentänderungssignal 5 wird dem Ansteuersignal 40 in dem nachfolgenden Schritt 305 überlagert. Sodann kehrt das Verfahren zum Schritt 300 zurück und ermittelt eine neue aktuelle Zustandsgröße Z' des Antriebsstranges. Wird für die dann neu ermittelte aktuelle Zustandsgröße Z' im Schritt 303 festgestellt, dass die aktuelle Zustandsgröße Z' weiterhin nicht in der Zielzustandsklasse 120 liegt, so werden die Schritte 304 und 305 erneut durchgeführt und der Applikationsparameter erneut verändert, bis die aktuell ermittelte Zustandsgröße Z' der Zielzustandsklasse 120 entspricht. Die Änderung des Applikationsparameters kann also schrittweise erfolgen. Das Verfahren durchläuft eine Regelschleife.

Wenn jedoch im Schritt 303 festgestellt wird, dass im vorausgegangenen Schritt des Ermittelns 300 eine der Zielzustandsklasse 120 zugeordnete aktuelle Zustandsgröße Z' ermittelt wurde, werden die Schritte 304 und 305 nicht durchführt und stattdessen in einem Schritt 306 das periodische Drehmomentänderungssignal 5 unabhängig von der aktuellen Zustandsgröße gebildet und der Ansteuergröße überlagert. Schließlich werden nach Durchführung des Schrittes 306 die Schritte a) bis d) wiederholt, bis im Schritt d) des Prüfens 303 zu einem Zeitpunkt festgestellt wird, dass die ermittelte aktuelle Zustandsklasse nicht mehr der vorgegebene Zielzustandsklasse 120 entspricht. Sodann wird, wie oben erläutert das Verfahren mit den Schritten 304 und 305 weiter betrieben.

Es versteht sich, dass die Zielzustandsklasse 120 frei vorgegeben werden kann. In Abhängigkeit von der angestrebten Qualität der Geräuschreduktion kann daher ein weiter oder enger gefasster Raumbereich des Klassifikationsraumes 100 als Zielzustandsklasse 120 angenommen werden.

## Patentansprüche

1. Verfahren zum Betrieb eines Antriebsstrangs (2) mit einem elektromotorischen Antrieb (4), wobei eine Drehzahl und ein Antriebsmoment des elektromotorischen Antriebs (4) über eine verzahnte Getriebestufe (12) für einen Abtrieb (19) gewandelt werden, und der elektromotorische Antrieb (4) mit einem Ansteuerungssignal (40) angesteuert wird, wobei dem Ansteuersignal (40) zur Dämpfung von Getriebegeräuschen ein periodisches Drehmomentänderungssignal (5) überlagert wird, welches das Antriebsmoment wechselweise verringert und verstärkt, wobei das periodische Drehmomentänderungssignal (5) in Phase mit einer periodischen Zahnsteifigkeitsänderung der verzahnten Getriebestufe (12) ist, wobei das Verfahren den folgenden Schritt aufweist:

   a) Ermitteln (300) einer von der Zahnsteifigkeit der verzahnten Getriebestufe (12) abhängigen aktuellen Zustandsgröße (Z') des Antriebsstranges aus wenigstens einem Betriebszustandssignal (S) des Antriebsstranges, **dadurch gekennzeichnet, dass** die im Schritt a) des Ermittelns (300) ermittelte aktuelle Zustandsgröße (Z') abhängig ist von einer verschleiß- und/oder alterungsbedingten Änderung der Zahnsteifigkeit der verzahnten Getriebestufe (12), und dass das Verfahren weiterhin die folgenden Schritte aufweist:
   b) Zuordnen (301) der aktuellen Zustandsgröße (Z') zu einem Klassifikationsraum von Zustandsgrößen (Z), wobei allen Zustandsgrößen (Z) des Klassifikationsraums Zustandsklassen (120, 221, 122, 123) zugeordnet sind,
   c) Ermittlung (302) einer der aktuellen Zustandsgröße (Z') in dem Klassifikationsraum (100) zugeordneten aktuellen Zustandsklasse,
   d) Prüfen (303) ob die im Schritt der Ermittlung (302) ermittelte aktuelle Zustandsklasse eine vorgegebene Zielzustandsklasse (120) ist,

   wobei das Verfahren, wenn die aktuelle Zustandsklasse nicht die Zielzustandsklasse (120) ist, weiterhin die folgenden Schritte ausführt:

   e) Erzeugen (304) des periodischen Drehmomentänderungssignals (5) in Abhängigkeit von einem Unterschied zwischen der im Schritt des Ermittelns (300) ermittelten aktuellen Zustandsgröße (Z') und der vorgegebenen Zielzustandsklasse (120),
   f) Überlagern (305) des Ansteuersignals (40) mit einem in Abhängigkeit von dem Unterschied erzeugten periodischen Drehmomentänderungssignal (5) und
   g) Wiederholen der vorausgegangenen Schritte a) bis f) zumindest bis im Schritt des Prüfens (303) festgestellt wird, dass im vorausgegangenen Schritt des Ermittelns (300) eine der Zielzustandsklasse (120) zugeordnete aktuelle Zustandsgröße (Z') ermittelt wurde.

2. Verfahren nach Anspruch 1, **dadurch gekennzeichnet, dass** wenn im Schritt des Prüfens (303) festgestellt wird, dass im vorausgegangenen Schritt des Ermittelns (300) eine der Zielzustandsklasse (120) zugeordnete aktuelle Zustandsgröße (Z') ermittelt wurde, das Verfahren den Schritt des Erzeugens (304) und den Schritt des Überlagerns (305) nicht durchführt und stattdessen in einem Schritt (306) das periodische Drehmomentänderungssignal (5) unabhängig von der aktuellen Zustandsgröße bildet und der Ansteuergröße überlagert, und Wiederholen der Schritte a) bis d) bis im Schritt des Prüfens (303) festgestellt wird, dass die ermittelte aktuelle Zustandsklasse nicht die vorgegebene Zielzustandsklasse (120) ist.

3. Verfahren nach Anspruch 1, **dadurch gekennzeichnet, dass** die Zielzustandsklasse (120) in dem Klassifikationsraum (100) auf der Grundlage von Referenz-Zustandsgrößen vorgegeben wird, wobei die Referenz-Zustandsgrößen zuvor in einer zum Schritt a) des Ermittelns (300) analogen Weise aus den gleichen Betriebszustandssignalen von Referenz-Antriebssträngen ermittelt werden, wobei die Referenz-Antriebsstränge unterschiedlichen Schadensklassen zugeordnet sind und jeder Referenz-Antriebsstrang jeder Schadensklasse bis auf einen individuell vorgegeben Schaden oder Verschleißzustand den gleichartigen Aufbau aufweist.

4. Verfahren nach einem der Ansprüche 1 bis 3, **dadurch gekennzeichnet, dass** ein Klassifikationsalgorithmus verwandt wird, wobei im Schritt a) des Ermittelns (300) aus dem wenigstens einem Betriebszustandssignal (S) des Antriebsstranges Werte mehrerer Merkmale ($T_1$ - $T_{11}$; $F_1$ - $F_{13}$) abgeleitet werden, und aus den Werten der mehreren Merkmale durch Koordinatentransformation Principal-Component-Größen (310, 311) gebildet werden, wobei die Anzahl der Merkmale ($T_1$ - $T_{11}$; $F_1$ - $F_{13}$) die Dimensionen eines Principal-Component-Raumes bilden, wobei der Principal-Component-Raum den Klassifikationsraum (100) bildet und wobei jede Position in dem Principal-Component-Raum eine Zustandsgröße (Z) darstellt, die den Werten der mehreren Merkmale ($T_1$ - $T_{11}$; $F_1$ - $F_{13}$) oder der daraus abgeleiteten Merkmale zugeordnet ist.

5. Verfahren nach Anspruch 4, **dadurch gekennzeichnet, dass** benachbarte Positionen in einem begrenzten Raumbereich des Principal-Component-Raums als eine einzige Zielzustandsklasse (120) vorgegeben sind und Positionen außerhalb dieses Raumbereichs als Anomalie vorgegeben sind.

6. Verfahren nach Anspruch 5, **dadurch gekennzeichnet, dass** Positionen außerhalb des der Zielzustandsklasse (120) zugeordneten Raumbereichs in wenigstens zwei weitere Zustandsklassen (121, 122, 123), insbesondere Schadensklassen definierende Zustandsklassen unterteilt sind.

7. Verfahren nach einem der vorstehenden Ansprüche 1 bis 6, **dadurch gekennzeichnet, dass** das wenigstens eine Betriebszustandssignal (S) oder mehrere Betriebszustandssignale ausgewählt sind aus der folgenden Gruppe von Betriebszustandssignalen:

    - ein Rotorlage-Signal des elektromotorischen Antriebs,
    - ein Motorstromsignal des elektromotorischen Antriebs,
    - ein Körperschallsensorsignal, welches den Körperschall wenigstens einer Komponente des Antriebsstrangs (2) erfasst
    - ein durch eine Schwingungsanregung des elektromotorischen Antriebs hervorgerufenes Luftschallsignal,
    - ein hydraulischer Druck einer hydraulischen Komponente des elektromotorischen Antriebs.

8. Verfahren nach einem der vorstehenden Ansprüche 1 bis 7, **dadurch gekennzeichnet, dass** im Schritt e) des Erzeugens (304) in Abhängigkeit von einem Unterschied zwischen der in Schritt a) ermittelten aktuellen Zustandsgröße (Z') und einer vorgegebenen Zielzustandsklasse (120) die Größe eines Applikationsparameters (A) gebildet wird und das periodische Drehmomentänderungssignal (5) in Abhängigkeit von der Größe des Applikationsparameters (A) verändert wird.

9. Computerprogramm, welches eingerichtet ist, jeden Schritt des Verfahrens nach einem der vorangehenden Ansprüche durchzuführen.

10. Elektronisches Speichermedium, auf welchem ein Computerprogramm nach dem vorangehenden Anspruch gespeichert ist.

11. Auswerte und Steuereinheit, welche ein elektronisches Speichermedium nach dem vorangehenden Anspruch und Mittel zur Durchführung der Verfahrensschritte des Verfahrens nach den Ansprüchen 1 bis 8 umfasst.


**Claims**

1. Method for operating a drive train (2) with an electromotive drive (4), wherein a speed and a drive torque of the electromotive drive (4) are converted via a toothed gear stage (12) for an output (19), and the electromotive drive (4) is controlled with a control signal (40), wherein a periodic torque change signal (5) is superimposed on the control signal (40) for damping gear noises and alternately reduces and intensifies the drive torque, wherein the periodic torque change signal (5) is in phase with a periodic change in the tooth stiffness of the toothed gear stage (12), wherein the method comprises the following step of:

    a) determining (300) a current state variable (Z') of the drive train, which is dependent on the tooth stiffness of the toothed gear stage (12), from at least one operating state signal (S) from the drive train, **characterized in that** that the current state variable (Z') determined in step a) of determining (300) depends on a wear-related and/or ageing-related change in the tooth stiffness of the toothed gear stage (12), and **in that** the method also comprises the following steps of:
    b) assigning (301) the current state variable (Z') to a classification space of state variables (Z), wherein all state variables (Z) in the classification space are assigned state classes (120, 221, 122, 123),
    c) determining (302) a current state class assigned to the current state variable (Z') in the classification space (100),

d) checking (303) whether the current state class determined in the step of determining (302) is a predefined target state class (120),

wherein, if the current state class is not the target state class (120), the method also performs the following steps of:

e) generating (304) the periodic torque change signal (5) on the basis of a difference between the current state variable (Z') determined in the step of determining (300) and the predefined target state class (120),

f) superimposing (305) a periodic torque change signal (5) generated on the basis of the difference on the control signal (40), and

g) repeating the preceding steps a) to f) at least until it is determined in the step of checking (303) that a current state variable (Z') assigned to the target state class (120) was determined in the preceding step of determining (300).

2. Method according to Claim 1, **characterized in that**, if it is determined in the step of checking (303) that a current state variable (Z') assigned to the target state class (120) was determined in the preceding step of determining (300), the method does not carry out the step of generating (304) and the step of superimposing (305) and instead, in a step (306), forms the periodic torque change signal (5) independently of the current state variable and superimposes it on the control variable, and repeating steps a) to d) until it is determined in the step of checking (303) that the determined current state class is not the predefined target state class (120).

3. Method according to Claim 1, **characterized in that** the target state class (120) in the classification space (100) is predefined on the basis of reference state variables, wherein the reference state variables are determined beforehand in a similar manner to step a) of determining (300) from the same operating state signals from reference drive trains, wherein the reference drive trains are assigned to different damage classes and each reference drive train in each damage class has the same structure except for individually predefined damage or a state of wear.

4. Method according to one of Claims 1 to 3, **characterized in that** a classification algorithm is used, wherein, in step a) of determining (300), values of a plurality of features ($T_1$ - $T_{11}$; $F_1$ - $F_{13}$) are derived from the at least one operating state signal (S) from the drive train, and principal component variables (310, 311) are formed from the values of the plurality of features by coordinate transformation, wherein the number of features ($T_1$ - $T_{11}$; $F_1$ - $F_{13}$) form the dimensions of a principal component space, wherein the principal component space forms the classification space (100), and wherein each position in the principal component space represents a state variable (Z) that is assigned to the values of the plurality of features ($T_1$ - $T_{11}$; $F_1$ - $F_{13}$) or the features derived therefrom.

5. Method according to Claim 4, **characterized in that** adjacent positions in a limited spatial region of the principal component space are predefined as a single target state class (120) and positions outside this spatial region are predefined as an anomaly.

6. Method according to Claim 5, **characterized in that** positions outside the spatial region assigned to the target state class (120) are divided into at least two further state classes (121, 122, 123), in particular state classes defining damage classes.

7. Method according to one of the preceding Claims 1 to 6, **characterized in that** the at least one operating state signal (S) or a plurality of operating state signals is/are selected from the following group of operating state signals:

- a rotor position signal from the electromotive drive,
- a motor current signal from the electromotive drive,
- a structure-borne sound sensor signal which captures the structure-borne sound of at least one component of the drive train (2),
- an airborne sound signal caused by a vibration excitation of the electromotive drive,
- a hydraulic pressure of a hydraulic component of the electromotive drive.

8. Method according to one of the preceding Claims 1 to 7, **characterized in that**, in step e) of generating (304), the size of an application parameter (A) is formed on the basis of a difference between the current state variable (Z') determined in step a) and a predefined target state class (120), and the periodic torque change signal (5) is changed on the basis of the size of the application parameter (A).

9. Computer program which is configured to carry out each step of the method according to one of the preceding claims.

10. Electronic storage medium, on which a computer program according to the preceding claim is stored.

11. Evaluation and control unit which comprises an electronic storage medium according to the preceding claim and means for carrying out the method steps of the method according to Claims 1 to 8.

**Revendications**

1. Procédé pour faire fonctionner une chaîne cinématique (2) comprenant un entraînement à moteur électrique (4), une vitesse de rotation et un couple d'entraînement de l'entraînement à moteur électrique (4) pouvant être convertis par l'intermédiaire d'un étage de transmission denté (12) pour une sortie (19), et l'entraînement à moteur électrique (4) étant commandé par un signal d'excitation (40), un signal périodique de variation de couple (5) étant superposé au signal d'excitation (40) pour l'amortissement de bruits de transmission, ce signal réduisant et amplifiant en alternance le couple d'entraînement, le signal périodique de variation de couple (5) étant en phase avec une variation périodique de rigidité de dent de l'étage de transmission denté (12), le procédé comportant l'étape suivante consistant à :

   a) déterminer (300) une grandeur d'état actuelle (Z') de la chaîne cinématique dépendant de la rigidité de dent de l'étage de transmission denté (12) à partir d'au moins un signal d'état de fonctionnement (S) de la chaîne cinématique, **caractérisé en ce que** la grandeur d'état actuelle (Z') déterminée à l'étape a) de détermination (300) dépend d'une modification due à l'usure et/ou au vieillissement de la rigidité de dent de l'étage de transmission denté (12), et **en ce que** le procédé comporte en outre les étapes suivantes consistant à :
   b) associer (301) la grandeur d'état actuelle (Z') à un espace de classification de grandeurs d'état (Z), des classes d'état (120, 221, 122, 123) étant associées à toutes les grandeurs d'état (Z) de l'espace de classification,
   c) déterminer (302) une classe d'état actuelle associée à la grandeur d'état actuelle (Z') dans l'espace de classification (100),
   d) vérifier (303) si la classe d'état actuelle déterminée à l'étape de la détermination (302) est une classe d'état cible (120) prédéfinie,

   le procédé exécutant en outre, si la classe d'état actuelle n'est pas la classe d'état cible (120), les étapes suivantes consistant à :

   e) générer (304) le signal périodique de variation de couple (5) en fonction d'une différence entre la grandeur d'état actuelle (Z') déterminée à l'étape de détermination (300) et la classe d'état cible (120) prédéfinie,
   f) superposer (305) le signal d'excitation (40) à un signal périodique de variation de couple (5) généré en fonction de la différence, et
   g) répéter les étapes a) à f) précédentes au moins jusqu'à ce qu'il soit constaté à l'étape de vérification (303) qu'une grandeur d'état actuelle (Z') associée à la classe d'état cible (120) a été déterminée à l'étape de détermination (300) précédente.

2. Procédé selon la revendication 1, **caractérisé en ce que**, lorsqu'il est constaté à l'étape de vérification (303) qu'une grandeur d'état actuelle (Z') associée à la classe d'état cible (120) a été déterminée à l'étape de détermination (300) précédente, le procédé n'exécute pas l'étape de génération (304) et l'étape de superposition (305) et, au lieu de cela, calcule, lors d'une étape (306), le signal périodique de variation de couple (5) indépendamment de la grandeur d'état actuelle et le superpose à la grandeur de commande, et répète les étapes a) à d) jusqu'à ce qu'il soit constaté à l'étape de vérification (303) que la classe d'état actuelle déterminée n'est pas la classe d'état cible (120) prédéfinie.

3. Procédé selon la revendication 1, **caractérisé en ce que** la classe d'état cible (120) est prédéfinie dans l'espace de classification (100) sur la base de grandeurs d'état de référence, les grandeurs d'état de référence étant préalablement déterminées d'une manière analogue à l'étape a) de détermination (300) à partir des mêmes signaux d'état de fonctionnement de chaînes cinématiques de référence, les chaînes cinématiques de référence étant associées à différentes classes de dommages et chaque chaîne cinématique de référence de chaque classe de dommages présentant une structure du même type à l'exception d'un état de dommage ou d'usure défini individuellement.

4. Procédé selon l'une des revendications 1 à 3, **caractérisé en ce qu'**un algorithme de classification est utilisé, des valeurs de multiples caractéristiques ($T_1$ - $T_{11}$ ; $F_1$ - $F_{13}$) étant dérivées à l'étape a) de détermination (300) à partir de l'au moins un signal d'état de fonctionnement (S) de la chaîne cinématique, et des grandeurs de composantes principales (310, 311) étant calculées à partir des valeurs des multiples caractéristiques par transformation de coordonnées, le nombre des caractéristiques ($T_1$ - $T_{11}$ ; $F_1$ - $F_{13}$) formant les dimensions d'un espace des composantes principales, l'espace des composantes principales formant l'espace de classification (100) et chaque position dans l'espace des composantes principales représentant une grandeur d'état (Z) qui est associée aux valeurs des multiples caractéristiques ($T_1$ - $T_{11}$ ; $F_1$ - $F_{13}$) ou aux caractéristiques qui en sont dérivées.

5. Procédé selon la revendication 4, **caractérisé en ce que** des positions adjacentes dans une zone spatiale limitée de l'espace des composantes principales sont prédéfinies en tant qu'unique classe d'état cible (120) et **en ce que** des positions situées en dehors de cette zone spatiale sont prédéfinies en tant qu'anomalie.

6. Procédé selon la revendication 5, **caractérisé en ce que** des positions situées en dehors de la zone spatiale associée à la classe d'état cible (120) sont subdivisées en au moins deux classes d'état supplémentaires (121, 122, 123), en particulier des classes d'état définissant des classes de dommages.

7. Procédé selon l'une des revendications 1 à 6, **caractérisé en ce que** l'au moins un signal d'état de fonctionnement (5) ou plusieurs signaux d'état de fonctionnement sont sélectionnés dans le groupe suivant de signaux d'état de fonctionnement :

   - un signal de position de rotor de l'entraînement à moteur électrique,
   - un signal de courant moteur de l'entraînement à moteur électrique,
   - un signal de capteur de bruit de structure, qui détecte le bruit de structure d'au moins un composant de la chaîne cinématique (2)
   - un signal de bruit aérien provoqué par une excitation vibratoire de l'entraînement à moteur électrique,
   - une pression hydraulique d'un composant hydraulique de l'entraînement à moteur électrique.

8. Procédé selon l'une des revendications 1 à 7, **caractérisé en ce que**, à l'étape e) de génération (304), la grandeur d'un paramètre d'application (A) est calculée en fonction d'une différence entre la grandeur d'état actuelle (Z') déterminée à l'étape a) et une classe d'état cible (120) prédéfinie, et le signal périodique de variation de couple (5) est modifié en fonction de la grandeur du paramètre d'application (A).

9. Programme informatique, lequel est conçu pour exécuter chaque étape du procédé selon l'une des revendications précédentes.

10. Support de stockage électronique sur lequel est stocké un programme informatique selon la revendication précédente.

11. Unité d'évaluation et de commande, laquelle comprend un support de stockage électronique selon la revendication précédente et des moyens destinés à exécuter les étapes du procédé selon les revendications 1 à 8.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015207632 A1
- DE 102020206669
- DE 102017218636 A1

**In der Beschreibung aufgeführte Nicht-Patentliteratur**

- **YAGUO LEI**. A new approach to intelligent fault diagnosis of rotating machinery. *Expert Systems with Applications*, 2008, vol. 35, 1593-1600